# FASCICULE DE BREVET EUROPEEN

(11) **EP 2 851 739 B1**
(45) Date de publication et mention de la délivrance du brevet: **08.05.2019**
(21) Numéro de dépôt: 14183994.4
(22) Date de dépôt: 08.09.2014
(51) Int. Cl.: G02C 13/00, B24B 9/14, B24B 49/12

(54) **Procédé d'acquisition et de mesure de données géométriques d'un verre de démonstration adapté à une monture de lunettes**
Verfahren zur Erfassung und Messung von geometrischen Daten eines Demonstrationsglases, das an ein Brillengestell angepasst ist
Method for acquiring and measuring geometric data of a demonstration lens adapted to a spectacle frame

(30) Priorité: 18.09.2013 FR 1358971
(43) Date de publication de la demande: 25.03.2015
(73) Titulaire: LUNEAU TECHNOLOGY OPERATIONS, 27340 Pont de l'Arche (FR)
(72) Inventeur: Videcoq, Jean-Jacques, Bernard, Joseph, 76570 PAVILLY (FR); Bizet, Bruno, Lucien, 27460 ALIZAY (FR)
(74) Mandataire: Lavoix

(56) Documents cités:
- EP-A1- 2 305 424
- EP-A1- 2 306 236
- DE-A1- 3 230 495
- FR-A1- 2 854 268

## Description

La présente invention est relative à un procédé d'acquisition et de mesure de données géométriques d'un verre de démonstration adapté à une monture de lunettes, en vue de la réalisation de lentilles ophtalmiques semblables à ce verre de démonstration , du type dans lequel on utilise un dispositif d'acquisition et de mesure de données géométriques qui comprend :
- un support transparent adapté pour porter un objet ophtalmique ;
- d'un côté du support, des moyens d'éclairage de ce support ;
- de l'autre côté du support, une caméra vidéo orientée vers le support et adaptée optiquement pour produire un signal vidéo représentatif d'au moins un motif associé à l'objet ophtalmique posé sur le support ; et
- des moyens d'analyse et de traitement de signal recevant en entrée le signal vidéo produit par la caméra.

Ce procédé est notamment mis en oeuvre afin de mesurer le verre de démonstration en vue d'une part de poser un adaptateur sur une ébauche de lentille ophtalmique, et d'autre part de reproduire le verre de démonstration, sous forme d'une lentille ophtalmique, en usinant cette ébauche.

Comme il est bien connu, un adaptateur est une pièce qui se fixe, par exemple par collage, sur une face de l'ébauche de verre (ou lentille) optique (ou ophtalmique) à usiner, et que l'on fixe ensuite, dans une position angulaire prédéterminée, sur l'un des deux demi-arbres porte-ébauche de la meuleuse ou autre machine d'usinage de verres optiques.

Le FR-A-2 854 268 décrit un procédé du type précité permettant d'obtenir des données utilisées pour le pilotage d'une machine de meulage et/ou de perçage de verres ophtalmologiques à commande numérique.

Un verre de démonstration est un verre en matière plastique transparente, non correctif, ayant le contour, et éventuellement au moins un perçage ou analogue, typique d'un modèle de monture de lunettes pour laquelle il faudra usiner des lentilles ophtalmiques en respectant la forme et l'orientation du verre de démonstration dans ladite monture.

Un motif géométrique désignera généralement le contour de l'objet, ou des lignes de marquage repérant notamment l'axe géométrique de la monture, mais il pourra également désigner des perçages de fixation ou analogues formés dans le verre de présentation. D'autres lignes de marquage peuvent constituer des motifs, notamment des lignes de marquage du centre de la pupille d'un utilisateur.

L'acquisition des données relatives à de tels motifs géométriques permet de piloter une machine de meulage et/ou de perçage de lentilles à commande numérique.

Dans le FR-A-2 854 268 précité, le verre de démonstration est posé sur le support avec sa face concave orientée vers le support. Avec certaines courbures de la sphère de cette face et certaines formes du contour du verre de démonstration, ce verre prend une position d'équilibre qui est inconnue et qu'il n'est pas possible d'évaluer à partir de l'image 2D fournie par le dispositif. Or, cette position d'équilibre affecte directement la projection 2D captée par la caméra et donc l'image obtenue. Dans de telles situations, il est donc impossible, à partir de l'image 2D, de mesurer avec précision la forme du contour à des fins de reproduction par une machine d'usinage de verres ophtalmiques comme une meuleuse.

L'invention a pour but d'éliminer cet inconvénient en fournissant un procédé qui permette d'obtenir avec précision, dans tous les cas, les données nécessaires au positionnement de l'adaptateur et au pilotage de la machine de taille de verres optiques.

A cet effet, l'invention a pour objet un procédé du type précité, caractérisé en ce que :
on prend un verre de démonstration ayant un contour adapté à la monture et deux faces sphériques parallèles ;
on trace un axe de monture sur le verre de démonstration, l'axe de monture étant parallèle à la tangente aux deux cercles au sommet de ceux-ci ;
on pose la face convexe du verre de démonstration sur le support transparent du dispositif d'acquisition et de mesure ;
on saisit deux motifs associés au verre de démonstration, à savoir d'une part son contour, d'autre part l'axe de monture, et on détermine les caractéristiques dimensionnelles de ces deux motifs ; et
on calcule la position du barycentre dudit contour.

Suivant d'autres caractéristiques de ce procédé :
- le dispositif d'acquisition et de mesure comprend un moniteur comportant un écran, les moyens d'analyse et de traitement de signal sont adaptés pour fournir au moniteur un signal représentatif desdits deux motifs et pour afficher ces deux motifs sur l'écran, et on affiche également sur l'écran ledit barycentre.
- on saisit la position de la pupille du porteur par rapport au verre de démonstration ;
- on affiche cette position sur l'écran en tant qu'image de centre optique ;
- on positionne sur une ébauche de lentille ophtalmique le centre optique et l'axe optique de cette ébauche, le cas échéant en tenant compte d'une correction d'axe demandée pour le porteur ;
- on trace sur l'ébauche des points qui définissent une droite parallèle à l'axe de la monture ;
- on positionne la face concave de l'ébauche sur le support en faisant coïncider le centre optique qu'elle porte et l'image de centre optique affichée sur l'écran, et en positionnant ladite droite alignée avec une image d'axe de monture qui apparait sur l'écran ;
- on pose un adaptateur sur la face convexe de l'ébauche en faisant correspondre le centre de l'adaptateur avec ledit barycentre ;
- le support est une plaque support plane et horizontale.

Des exemples non limitatifs de mise en oeuvre de l'invention vont maintenant être décrits en regard des dessins annexés, sur lesquels :
- les figures 1A à 1D représentent schématiquement divers types de montures ;
- la figure 2 représente schématiquement une ébauche de verre optique à meuler ;
- la figure 3 représente schématiquement un dispositif d'acquisition et de mesure de données géométriques utilisé dans le procédé suivant l'invention ;
- la figure 4 représente schématiquement une variante du dispositif de la figure 3 ;
- la figure 5 illustre les premières étapes du procédé ; et
- les figures 6 et 7 illustrent les étapes ultérieures du procédé.

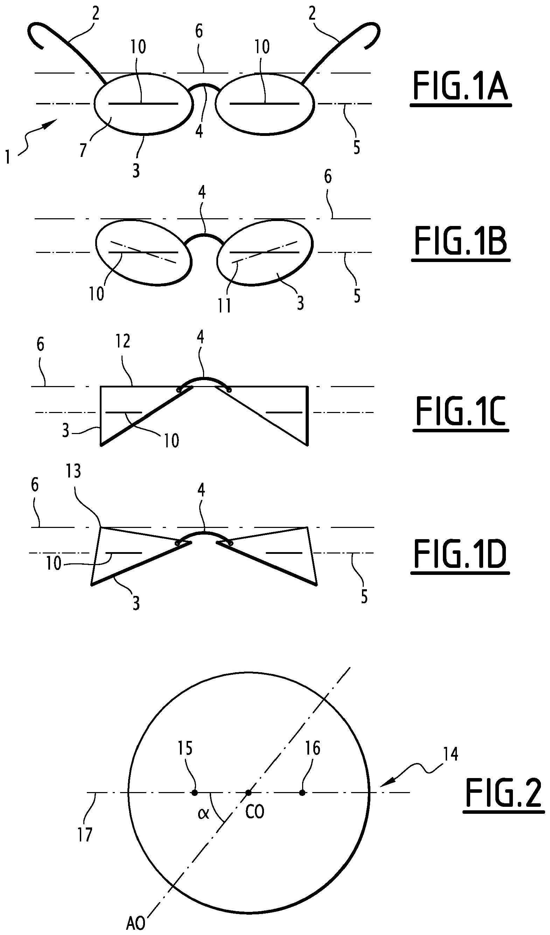

On a représenté sur la figure 1A une monture de lunettes 1 qui comprend deux branches 2 et deux cercles de monture 3 de forme ovale reliés par un pont 4. A cette monture 1 est associé un axe de monture 5 parallèle à la tangente 6 aux deux cercles 3 au sommet de ceux-ci.

La monture 1 est équipée de deux verres de démonstration 7, transparents et non correctifs, dont la forme doit être reproduite avec précision à partir d'une ébauche de verre optique afin de constituer une paire de lunettes.

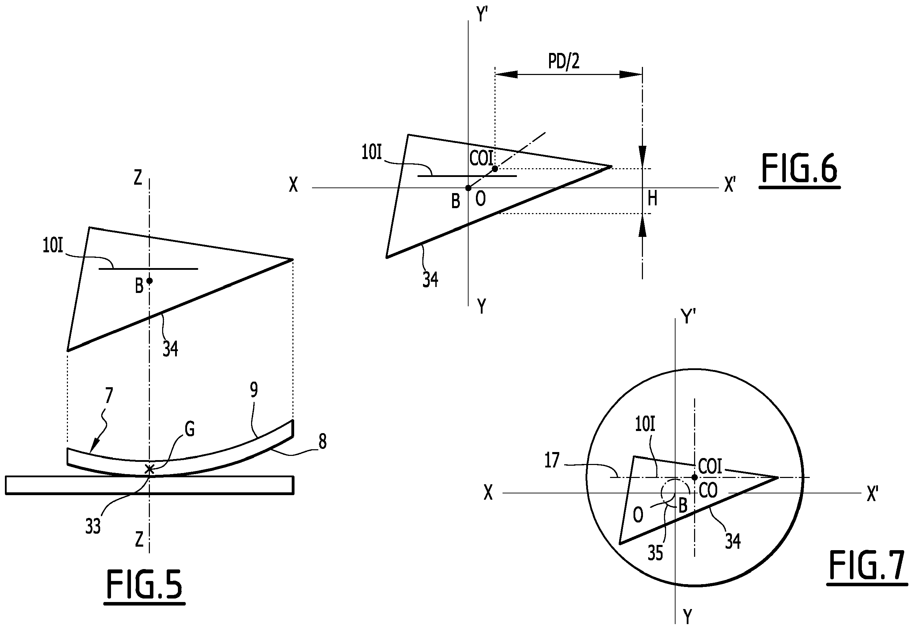

Chaque verre 7 comporte deux faces sphériques parallèles, à savoir une face avant convexe 8 et une face arrière concave 9 (figure 5), et porte sur l'une de ses faces un trait 10 qui s'étend suivant l'axe de monture 5.

Les figures 1B à 1D, où les branches 2 n'ont pas été représentées, illustrent d'autres types de montures :
- figure 1B : les ovales des deux cercles 3 sont divergents en « yeux de chat », de sorte que leurs axes médians 11 ne sont pas parallèles à l'axe de monture 5, mais forment un angle avec celui-ci.
- Figure 1C : les cercles 3 sont en forme de triangle rectangle, avec leur grand côté 12 dans le prolongement l'un de l'autre. La tangente 6 passe ainsi par les deux côtés 12.
- Figure 1D : les cercles 3 sont analogues à ceux de la figure 1C, mais leurs grands côtés supérieurs 12 divergent et ne sont donc pas parallèles à l'axe de monture 5. La tangente 6 passe ainsi par les coins supérieurs extérieurs 13 des deux cercles 3.

La figure 2 représente schématiquement une ébauche de verre optique circulaire 14 destinée à être transformée par meulage en un verre optique s'adaptant parfaitement dans la monture 1 choisie. Le centre optique CO de l'ébauche est généralement voisin du centre de son contour circulaire, et a été représenté à ce centre sur la figure 2.

Au moyen d'un frontofocomètre, l'opticien a positionné l'axe optique AO de la lentille en fonction de la prescription. Il a également marqué et matérialisé sur la lentille, au moyen d'un point CO placé au centre optique et de deux points 15, 16 situés de part et d'autre du point CO, un axe 17 passant par le point CO et parallèle à l'axe de monture 5, cet axe 17 et l'axe optique AO formant un angle α prescrit. Suivant les cas, l'angle α peut être égal à zéro ou être positif comme représenté sur la figure 2.

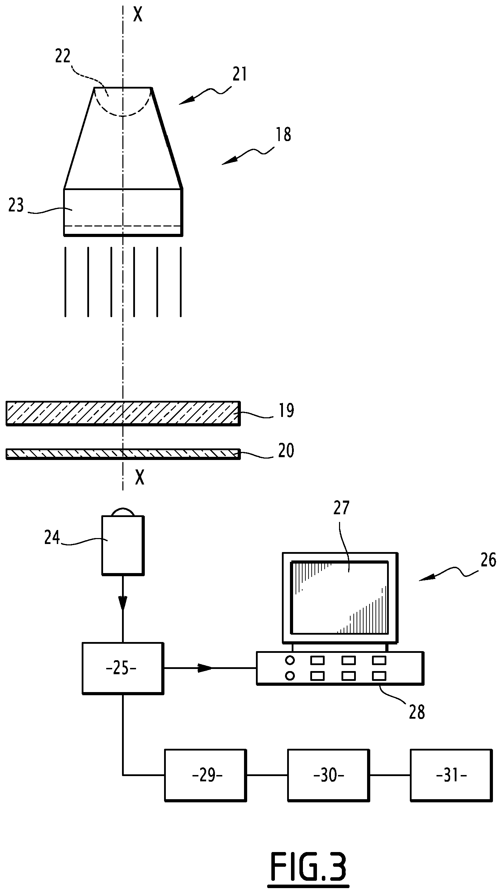

La figure 3 représente un dispositif d'acquisition et de mesure 18, qui peut notamment être tel que décrit dans le FR-A-2 854 268 précité.

Le dispositif 18 comprend un support, en particulier une plaque-support, plan et horizontal transparent 19 sur laquelle peuvent être placés successivement un verre de présentation 7 et une ébauche 14.

Sous la plaque-support 19 est disposé, parallèlement, un écran de projection plan 20, qui peut être notamment constitué d'une plaque de verre dépoli ou d'une feuille de matériau translucide, du type calque. Des moyens 21 d'éclairage de l'objet analysé sont disposés au-dessus de la plaque-support 19, de façon à éclairer la totalité de l'objet 7 ou 14 et à projeter une ombre de l'objet sur l'écran de projection 20, au travers de la plaque support 19. Ces moyens d'éclairage 21 sont essentiellement constitués d'une source lumineuse 22, par exemple une LED, et d'un ensemble optique ou collimateur 23, en général formé d'un ensemble de lentilles. Cet ensemble 23 est destiné à canaliser le rayonnement lumineux émis par la source, et à assurer un éclairage régulier de l'objet 7 ou 14 avec des rayons lumineux verticaux.

L'image de l'objet formée sur l'écran de projection 20, cette image étant en fait l'ombre de l'objet sur cet écran, est observée par une caméra vidéo matricielle 24 reliée à une unité d'analyse d'image et de traitement de signal 25, elle-même reliée à un moniteur 26. Cette unité 25 est adaptée pour déterminer les caractéristiques dimensionnelles des motifs saisis par la caméra, de façon connue en soi. Le moniteur 26 comprend un écran d'affichage 27 et un pavé 28 de commande et de réglage de l'affichage.

Le dispositif comprend en outre des moyens de programmation 29 reliés d'une part à l'unité d'analyse et de traitement 25 et d'autre part à une unité de commande 30 de la meuleuse 31.

Comme décrit dans le FR-A-2 854 268 précité, l'unité d'analyse et de traitement 25 peut comprendre des moyens de correction d'image pour tenir compte de la distorsion des pixels en fonction de la distance à l'axe central vertical X-X de la caméra 24 et des moyens d'éclairage 21.

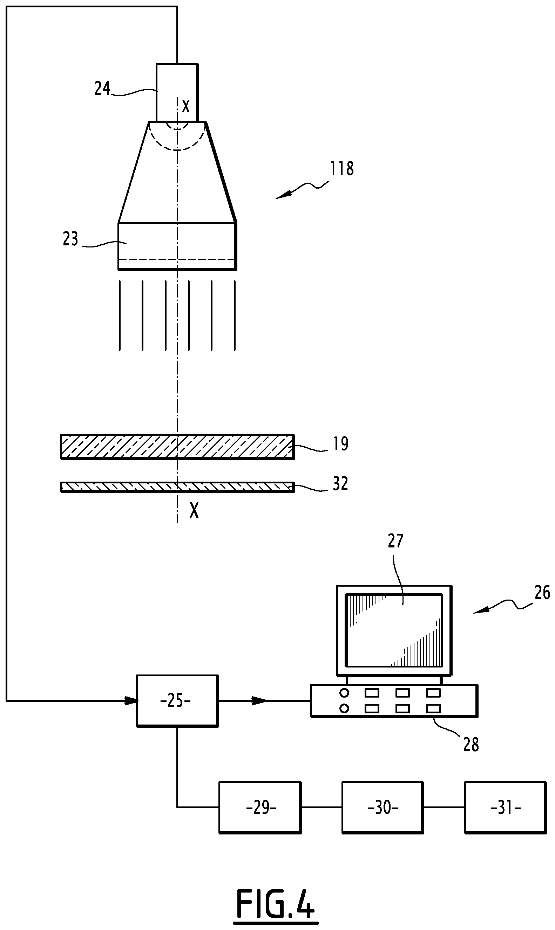

Le dispositif d'acquisition et de mesure 118 représenté à la figure 4 ne diffère du dispositif 18 de la figure 3 que par l'interversion de la position des moyens d'éclairage 21 et de la caméra 24.

En effet, les moyens d'éclairage 21 sont constitués par un diffuseur plan et horizontal 32 disposé sous le support 19, à la place de l'écran 20 de la figure 3, tandis que la caméra 24 est disposée au-dessus du collimateur 23, en regardant vers le bas suivant l'axe X-X. Dans ce cas, c'est l'image de l'objet posé sur le support 19 qui est captée par la caméra, et non plus son ombre sur un écran comme c'est le cas avec le dispositif de la figure 3.

On décrira maintenant, en regard des figures 5 à 7, le positionnement de l'ébauche 14 de la figure 2 sur le support 19 du dispositif de la figure 3 et de celui de la figure 4.

Le verre de démonstration 7, supposé adapté à la monture de la figure 1D, est tout d'abord posé sur le support 19, avec sa face convexe 8 tournée vers le bas. On supposera que l'angle α prescrit (figure 2) est nul, mais on comprendra que le procédé décrit s'adapte de façon simple au cas où l'angle α est positif.

Le verre étant sphérique, il trouve une position d'équilibre stable déterminée par son contour, dans lequel la face 8 possède un point de contact 33 unique avec le support 19.

L'épaisseur du verre étant constante et la matière étant homogène, le verre 7 trouve sa position d'équilibre lorsque le centre de gravité G du verre est à la verticale du point de contact 33.

De plus :
- si l'on considère un axe vertical Z-Z perpendiculaire au plan de pose et passant par le centre de gravité G et le point de contact 33, cet axe passe par le barycentre B de la forme 2D, référencée 34, constituée par la projection du verre 7 sur le support 19 et sur l'écran 20 ;
- l'axe Z-Z étant parallèle à l'axe de visée de la caméra, à cette position d'équilibre du verre, le contour du verre sur l'image 34 a son périmètre maximal.

Par traitement de l'image captée par la caméra 24, on détermine le contour du verre et le barycentre B, ainsi que l'image 10I du trait 10, et l'on positionne l'image du verre de démonstration, sur l'écran 27, par rapport à un repère orthonormé X-X', Y-Y' d'origine O (figure 6), de manière que le barycentre B coïncide avec le point O et que le trait 10I soit parallèle à l'axe X-X'.

L'opticien place alors sur l'écran l'image COI du centre optique CO de l'ébauche 14 dans ce repère orthonormé en fonction de la position de la pupille du porteur. Pour ce faire, à titre d'exemple, il peut saisir le demi-écart pupillaire (PD, distance entre les deux pupilles, /2) et la distance H entre la pupille et le bas de la monture à l'aplomb de la pupille.

Comme illustré sur la figure 7, l'opticien pose ensuite la face concave de l'ébauche 14 sur le support 19. L'image de l'ébauche est intégrée sur l'écran et vient en superposition aux informations précédemment décrites, à savoir le contour du verre de présentation orienté par rapport à l'axe de la monture. De cette manière, l'opticien positionne l'ébauche 14 de façon que son centre optique CO coïncide avec le point COI et que la droite 17 soit parallèle ou alignée au trait 10I. Si α = 0, l'axe optique AO est confondu également avec le trait 10I.

L'adaptateur 35 peut enfin être fixé, par exemple collé, sur la face supérieure convexe de l'ébauche.

Le centre de l'adaptateur doit être positionné de façon à correspondre au point O, qui lui-même correspond au barycentre B de la forme 2D du verre de démonstration. L'axe de support de l'adaptateur est alors parfaitement perpendiculaire à la surface de l'écran, et son orientation angulaire est, de façon classique, rendue parallèle à l'axe 10I.

Finalement, on obtient dans tous les cas un positionnement très précis de l'adaptateur ainsi qu'un pilotage très précis de la machine d'usinage.

En variante, le dispositif 18, 118 ne comporte pas de moniteur 26. Les données générées par l'unité 25 sont transférées à un dispositif séparé, dit « bloqueur », de pose de l'adaptateur.

Pour une lentille comportant au moins une surface cylindrique ou une surface torique, l'axe optique est aligné respectivement avec une génératrice du cylindre ou avec les génératrices de rayon R ou r d'un tore, définissant la surface cylindrique ou torique de la lentille. En règle générale, l'axe optique passe toujours dans un plan contenant le centre optique de la lentille, à l'exception des cas où la lentille comporte une surface cylindrique en combinaison avec une surface plane. La position et l'orientation de l'axe optique d'une lentille est déterminé de manière connue au moyen d'un frontofocomètre.

## Revendications

1. Procédé d'acquisition et de mesure de données géométriques d'un verre de démonstration (7) adapté à une monture de lunettes (1), la monture de lunettes (1) comprend deux branches (2) et deux cercles de monture (3) de forme ovale reliés par un pont (4), en vue de la réalisation de lentilles ophtalmiques semblables à ce verre de démonstration, du type dans lequel on utilise un dispositif (18 ; 118) d'acquisition et de mesure de données géométriques qui comprend :
- un support transparent (19) adapté pour porter un objet ophtalmique ;
- d'un côté du support, des moyens (21) d'éclairage de ce support ;
- de l'autre côté du support, une caméra vidéo (24) orientée vers le support et adaptée optiquement pour produire un signal vidéo représentatif d'au moins un motif associé à l'objet ophtalmique posé sur le support ; et
- des moyens (25) d'analyse et de traitement de signal recevant en entrée le signal vidéo produit par la caméra,
le procédé étant **caractérisé en ce que** :
(a) on prend un verre de démonstration (7) ayant un contour adapté à la monture (1) et deux faces sphériques parallèles ;
(b) on trace un axe de monture (10) sur le verre de démonstration, l'axe de monture (10) étant parallèle à la tangente (6) aux deux cercles (3) au sommet de ceux-ci ;
(c) on pose la face convexe (8) du verre de démonstration (7) sur le support transparent (19) du dispositif d'acquisition et de mesure (18) ;
(d) on saisit deux motifs associés au verre de démonstration, à savoir d'une part son contour, d'autre part l'axe de monture (10), et on détermine les caractéristiques dimensionnelles de ces deux motifs ; et
(e) on calcule la position du barycentre (B) dudit contour.

2. Procédé suivant la revendication 1, **caractérisé en ce que** le dispositif d'acquisition et de mesure comprend un moniteur (26) comportant un écran (27), **en ce que** les moyens (25) d'analyse et de traitement de signal sont adaptés pour fournir au moniteur (26) un signal représentatif desdits deux motifs et pour afficher ces deux motifs sur l'écran (27), et **en ce qu'**on affiche également sur l'écran ledit barycentre (B).

3. Procédé suivant la revendication 2, **caractérisé en ce que** :
- on saisit la position de la pupille du porteur par rapport au verre de démonstration ;
- on affiche cette position sur l'écran (27) en tant qu'image de centre optique (COI) ;
- on positionne sur une ébauche (14) de lentille ophtalmique pour une lentille comportant au moins une surface cylindrique ou une surface torique le centre optique (CO) et l'axe optique (AO) de cette ébauche, le cas échéant en tenant compte d'une correction d'axe demandée pour le porteur ;
- on trace sur l'ébauche des points (15, CO, 16) qui définissent une droite (17) parallèle à l'axe (10) de la monture ;
- on positionne la face concave de l'ébauche (14) sur le support (19) en faisant coïncider le centre optique (CO) qu'elle porte et l'image de centre optique (COI) affichée sur l'écran, et en positionnant ladite droite (17) alignée ou parallèle avec une image d'axe de monture (10I) qui apparait sur l'écran (27) ; et
- on pose un adaptateur (35) sur la face convexe de l'ébauche en faisant correspondre le centre de l'adaptateur avec ledit barycentre (B).

## Patentansprüche

1. Verfahren zum Beschaffen und zum Messen von geometrischen Daten eines Demonstrationsglases (7), das auf ein Brillengestell (1) abgestimmt ist, wobei das Brillengestell (1) zwei Bügel (2) und zwei ovalförmige Brillenfassungen (3), die durch einen Steg (4) verbunden sind, umfasst, mit dem Ziel der Realisierung von Brillengläsern gleich diesem Demonstrationsglas, wobei eine Vorrichtung (18; 118) zum Beschaffen und zum Messen von geometrischen Daten verwendet wird, die umfasst:
- einen transparenten Träger (19), der angepasst ist, ein ophtalmisches Objekt zu tragen;
- von einer Seite des Trägers her Mittel (21) zum Beleuchten dieses Trägers;
- von der anderen Seite des Trägers her eine Videokamera (24), die zu dem Träger gerichtet ist und optisch so angepasst ist, dass ein Videosignal erzeugt wird, das für mindestens ein dem ophtalmischen Objekt, das auf dem Träger liegt, zugeordnetes Motiv repräsentativ ist; und
- Mittel (25) zur Signalanalyse und -verarbeitung, die am Eingang das von der Kamera erzeugte Videosignal empfangen,
wobei das Verfahren **dadurch gekennzeichnet ist, dass**:
(a) ein Demonstrationsglas (7) genommen wird, das eine Kontur, die an das Gestell (1) angepasst ist, und zwei parallele sphärische Flächen aufweist;
(b) eine Achse (10) des Gestells auf das Demonstrationsglas gezeichnet wird, wobei die Achse (10) des Gestells parallel zu der Tangente (6) an die zwei Fassungen an deren Scheitelpunkte liegt;
(c) die konvexe Fläche (8) des Demonstrationsglases (7) auf den transparenten Träger (19) der Vorrichtung (18) zum Beschaffen und zum Messen gelegt wird;
(d) zwei dem Demonstrationsglas zugeordnete Motive, nämlich einerseits dessen Kontur und andererseits die Achse (10) des Gestells erfasst werden und die Abmessungen dieser zwei Motive bestimmt werden; und
(e) die Position des Baryzentrums (B) der Kontur berechnet wird.

2. Verfahren nach Anspruch 1, **dadurch gekennzeichnet, dass** die Vorrichtung zum Beschaffen und zum Messen einen einen Bildschirm (27) aufweisenden Monitor (26) umfasst, dass die Mittel (25) zur Signalanalyse und -verarbeitung angepasst sind, dem Monitor (26) ein Signal zu liefern, das repräsentativ für die zwei Motive ist, und diese zwei Motive auf dem Bildschirm (27) anzuzeigen, und dass auf dem Bildschirm auchdas Baryzentrum (B) angezeigt wird.

3. Verfahren nach Anspruch 2, **dadurch gekennzeichnet, dass**:
- die Position der Pupille des Trägers in Bezug auf das Demonstrationsglas erfasst wird;
- diese Position auf dem Bildschirm (27) als Bild des optischen Zentrums (COI) angezeigt wird;
- auf einen Rohling (14) des Brillenglases für ein mindestens eine zylindrische Fläche oder eine torische Fläche aufweisendes Glas, das optische Zentrum (CO) und die optische (AO) dieses Rohlings positioniert wird, gegebenenfalls unter Berücksichtigung einer Achsenkorrektur, die für den Träger verlangt wird;
- auf den Rohling Punkte (15, CO, 16) gezeichnet werden, die eine Gerade (17) parallel zur Achse (10) des Gestells definieren;
- die konkave Fläche des Rohlings (14) auf den Träger (19) positioniert wird, wobei das optische Zentrum (CO), das er trägt, und das Bild des optischen Zentrums (COI), das auf dem Bildschirm angezeigt wird, in Übereinstimmung gebracht wird, und die Gerade (17) ausgerichtet oder parallel mit dem Bild der Achse (10I) des Gestells, die auf dem Bildschirm (27) erscheint, positioniert wird; und
- ein Adapter (35) auf die konvexe Fläche des Rohlings gelegt wird, wobei das Zentrum des Adapters mit dem Baryzentrum (B) übereinstimmend gemacht wird.

## Claims

1. A method for acquiring and measuring geometrical data of a demonstration lens (7) adapted to a spectacle frame (1), the spectacle frame (1) comprises two branches (2) and two frame circles (3) of an oval shape connected through a bridge (4), with view to producing ophthalmic lenses similar to this demonstration lens, of the type in which a device (18 ; 118) for acquiring and measuring geometrical data is used, which comprises:
- a transparent support (19) is suitable for bearing an ophthalmic object;
- on one side of the support, means (21) for illuminating this support;
- on the other side of the support, a video camera (24) oriented towards the support and optically adapted for producing a video signal representative of at least one pattern associated with the ophthalmic object laid on the support; and
- signal analysis and processing means (25) receiving at the input the video signal produced by the camera,
the method being **characterized in that**:
(a) a demonstration lens (7) is taken, having a contour adapted to the frame (1) and two parallel spherical faces;
(b) a frame axis (10) is drawn on the demonstration lens, the frame axis (10) being parallel to the tangent (6) of two circles (3) at the top of the latter;
(c) the convex face (8) of the demonstration lens (7) is laid on the transparent support (19) of the acquisition and measurement device (18);
(d) two patterns associated with the demonstration lens are captured, i.e. its contour on the one hand, the frame axis (10) on the other hand, and the dimensional characteristics of both of these patterns are determined; and
(e) the position of the barycenter (B) of said contour is calculated.

2. The method according to claim 1, **characterized in that** the acquisition and measurement device comprises a monitor (26) including a screen (27), **in that** the signal analysis and processing means (25) are adapted so as to provide to the monitor (26) a representative signal of said two patterns and to display these two patterns on the screen (27), and **in that** said barycenter (B) is also displayed on the screen.

3. The method according to claim 2, **characterized in that**:
- the position of the pupil of the wearer is captured relatively to the demonstration lens;
- this position is displayed on the screen (27) as an image of an optical center (COI);
- on an ophthalmic lens blank (14) for a lens including at least one cylindrical surface or one toroidal surface, the optical center (CO) and the optical axis (AO) of this blank are positioned, if necessary by taking into account a requested axis correction for the wearer;
- points (15, CO, 16) which define a line (17) parallel to the axis (10) of the frame are drawn on the blank;
- the concave face of the blank (14) is positioned on the support (19) by having the optical center (CO) which it bears coincide with the optical center image (COI) displayed on the screen, and by positioning said straight line (17) aligned or parallel with a frame axis image (101) which appears on the screen (27); and
- an adapter (35) is placed on the convex face of the blank by having the center of the adapter correspond to said barycenter (B).
